# EUROPEAN PATENT APPLICATION

(11) **EP 2 998 917 A1**
(43) Date of publication of application: **23.03.2016**
(21) Application number: 14797102.2
(22) Date of filing: 24.04.2014
(51) Int. Cl.: G06Q 30/02, G06F 17/30, G06Q 30/08

(54) **ADVERTISING CONTENT PROVISION DEVICE AND ADVERTISING CONTENT PROVISION METHOD**

(30) Priority: 13.05.2013 JP 2013100946
(71) Applicant: Panasonic Intellectual Property Management Co., Ltd., Osaka-shi, Osaka 540-6207 (JP)
(72) Inventor: WAKAKO, Takeshi, Osaka-shi, Osaka 540-6207 (JP)
(74) Representative: Vigand, Philippe
(86) International application number: PCT/JP2014/002312
(87) International publication number: WO 2014/185017

(57) **Abstract**

An advertisement content providing apparatus (4) receives moving body information for specifying a moving body and route information for specifying a route, from a business operator of moving body (2) and selects at least one of advertisement contents to be provided, from at least two or more advertisement contents based on a profit efficiency determined by multiplying a click rate for the moving body, a click rate for the route and a bid price of an advertiser (1). According to this configuration, by using past achievements and distributing only advertisement suitable to a destination of the moving body and display unit of advertisement contents, it is possible to reduce distribution costs of the moving body which is difficult to have constant access, and increase a click rate of the advertisement.

## Description

### TECHNICAL FIELD

The present disclosure relates to an advertisement content providing apparatus and an advertisement content providing method which increase advertising effectiveness and raise revenue obtained from the advertisement, when providing advertisement to passengers on a moving body.

### BACKGROUND ART

Conventionally, when displaying advertisement contents on a webpage on the Internet, online advertisement service providers select advertisement related to a main subject of online content, attract users' attention by displaying the advertisement on users' display terminals and increase a click rate of the advertisement.

Meanwhile, it is the mainstream that an advertiser tags contents of advertisement by self-reported. Therefore, it is difficult to evaluate validity of the tags, and when a higher bid price is set, advertisement which does not necessarily relate to a main subject of online content is selected or displayed. Therefore, it is not possible to increase the click rate.

In order to solve such a problem, PTL 1 discloses a method of selecting and displaying one from a plurality of candidates of advertisement contents based on not only a tag and a bid price but also a profit efficiency of a predetermined time period.

However, when a user is in a moving body such as an airplane, a train or a car, there are time characteristics different from those of a normal life due to restriction such as transportation conditions or a time difference. Therefore, the profit efficiency is not determined in a period in at least time units such as day or night.

In addition, it is difficult to use service provided by a general online advertisement service provider through a network in real time in a moving body such as an airplane, a train or a car, and therefore it is necessary to construct a limited network available in the moving body. However, enormous time, data storage space and cost are required to install statistical data and all advertisement data per time period in such a limited network.

The present disclosure provides, to passengers, advertisement which increases a click rate in consideration of a profit efficiency under a situation where communication is not always stable as in an airplane, a train or a car.

### Citation List

### Patent Literature

PTL 1: Japanese Patent No. 4431058

### SUMMARY OF THE INVENTION

An advertisement content providing apparatus according to the present disclosure includes: advertisement selecting unit which receives moving body information for specifying a moving body and route information for specifying a route, and selects a plurality of advertisement contents for the specified moving body and the specified route; and click rate counting unit which counts a click rate for each of the advertisement contents clicked by passengers for the moving body and a click rate for each of the advertisement contents clicked by the passengers for the route, and at least one of the advertisement contents selected by the advertisement selecting unit is selected from at least two or more advertisement contents based on a profit efficiency for a pair of the moving body and the route, and the profit efficiency is determined by multiplying the click rates and a bid price of an advertiser.

An advertisement content providing system according to the present disclosure can select advertisement contents suitable to a moving body or a route even in a moving body such as an airplane, a train or a car, and increase a click rate. Further, it is possible to distribute efficient minimal advertisement data for each route, and consequently reduce time, data storage space and cost required for distribution and installation under a situation where communication is not always stable as in a moving body.

### BRIEF DESCRIPTION OF DRAWINGS

FIG. 1 is a view illustrating an advertisement providing system according to a present exemplary embodiment.
FIG. 2 is a view illustrating an advertisement content providing apparatus illustrated in FIG. 1.
FIG. 3 is a view illustrating an example of a user interface used by an advertiser to register new advertisement contents through the Internet.
FIG. 4 is a view illustrating an example of a user interface used by a business operator of moving body to register route information.
FIG. 5 is a view illustrating an example of a user interface used by the business operator of moving body to register, check and correct advertisement display areas for each route.
FIG. 6 is a view illustrating an example of contents of advertisement content database illustrated in FIG. 1.
FIG. 7 is a view illustrating an example of actual result database of advertisement contents for each moving body/route.
FIG. 8 is a view illustrating an example of moving body/route information database illustrated in FIG. 1.
FIG. 9 is a view illustrating an example of database of advertisement display areas for each route illustrated in FIG. 1.
FIG. 10 is a view illustrating content providing apparatus in moving body illustrated in FIG. 1.
FIG. 11A is a view illustrating an example of displaying advertisement contents.
FIG. 11B is a view illustrating an example of displaying advertisement contents.
FIG. 12 is a view illustrating a flowchart of selecting contents to be displayed.

### DESCRIPTION OF EMBODIMENTS

An exemplary embodiment will be described in detail below optionally with reference to the drawings. However, the exemplary embodiment will not be described in detail more than necessary in some cases. For example, in some cases, matters which have already been well known will not be described in detail, and substantially the same components will not be described again. This is to prevent the following description from being redundant more than necessary, and help one of ordinary skill in the art easily understand the following description.

In addition, the applicant provides the accompanying drawings and the following description to make it easy for one of ordinary skill in the art to sufficiently understand the present disclosure, and does not intend to limit the subject matters recited in the claims.

### (First Exemplary Embodiment)

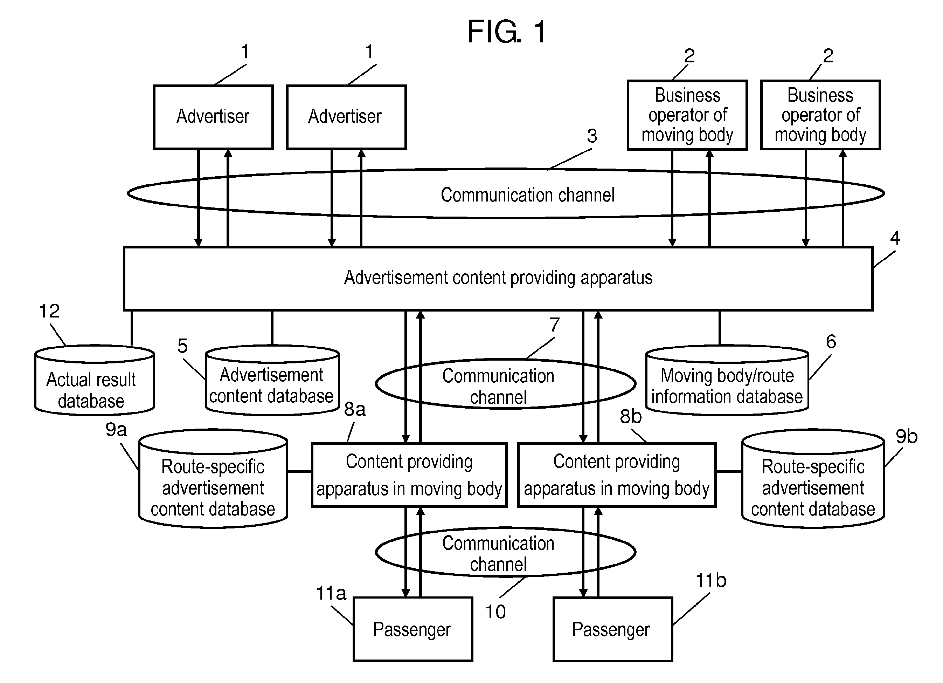

The first exemplary embodiment will be described below with reference to FIGS. 1 to 12. The exemplary embodiment of the present disclosure discloses an advertisement content providing system and an advertisement content providing method for a moving body based on a profit efficiency for each pair of moving body and route.

FIG. 1 illustrates an example of an entire configuration of an advertisement content providing system. Advertiser 1 connects to advertisement content providing apparatus 4 through communication channel 3, and registers advertisement contents which advertiser 1 wishes to display in a moving body. Advertiser 1 may be an advertisement holder, or may be an advertising agency which unifies a plurality of advertisement holders. In both cases, a plurality of advertisers 1 can individually register advertisement contents in advertisement content providing apparatus 4.

Communication channel 3 may use an http network based on wired or wireless connection or a safer https network, or may use the mail or e-mail. Advertisement contents registered by advertiser 1 are stored in advertisement content database 5.

Business operator of moving body 2 connects to advertisement content providing apparatus 4 through communication channel 3, and registers information of a moving body in which advertiser 1 wishes to display advertisement contents and route information of the moving body. Business operator of moving body 2 includes an airline company, a railroad company, a ship company, a bus company and the like. Business operator of moving body 2 may further include a sales and service company or a transportation company, for a car and a bicycle targeted at individuals. In any of these case, each of a plurality of business operators of moving body 2 can individually register moving body information and route information of the moving body, in which the business operator of moving body 2 wishes to display advertisement contents, in advertisement content providing apparatus 4 .

The moving body information and the route information of the moving body registered by business operator of moving body 2 are stored in moving body/route information database 6. Advertisement content providing apparatus 4 extracts optimal advertisement contents for each pair of moving body and route which are stored in moving body/route information database 6, from advertisement content database 5 based on information stored in actual result database 12, and lists the optimal advertisement contents before the optimal advertisement contents are transferred to the moving body.

Advertisement content providing apparatus 4 transfers actual data of the listed the advertisement contents, to route-specific advertisement content database 9 connected to content providing apparatus in moving body 8 connected through communication channel 7. Although a transfer timing is preferable while the moving body is parked or is maintained, it may be acceptable while the moving body is moving. Communication channel 7 may use an http network based on wired or wireless connection, a local connection based on SCSI or another connection by unique standards defined for each moving body.

Content providing apparatus in moving body 8 provides advertisement contents in route-specific advertisement content database 9 to passengers 11 who get on the moving body, through communication channel 10. Provided manners includes a manner for a plurality of passengers using displays located in decks or vehicles, and a manner for an individual passenger using displays located in a passenger compartment, a passenger seat or a smartphone and a tablet computer which the passenger owns. Communication channel 10 uses an http network based on wired or wireless connection. In case of a smartphone or a tablet computer which the passenger owns, using an http network based on wireless connection is preferable for convenience of compatibility.

Content providing apparatus in moving body 8 holds actual results of clicks or actions by passengers through communication channel 10, and transfers the actual results to advertisement content providing apparatus 4 through communication channel 7 during maintenance of the moving body or the like. Advertisement content providing apparatus 4 stores actual results counted for each moving body and actual results counted for each route (e.g. actual results of a number of views, a number of times of clicks and a click rate) in actual result database 12.

Advertisement content providing apparatus 4 provides the actual results for each of route information such as a destination of the moving body, stored in actual result database 12, to advertiser 1. By obtaining numerical values of actual results, for example, advertiser 1 can automatically control to set advertisement contents intensively for a route to San Francisco International Airport, since the advertisement of advertiser 1 has a high effect in the route to San Francisco International Airport , or to replace advertisement contents, since the advertisement of advertiser 1 has a low effect in the route to San Francisco International Airport.

Advertisement content providing apparatus 4 provides actual results with respect to each of provided manners for displaying advertisement contents in a moving body, stored in actual result database 12, to business operator of moving body 2. Business operator of moving body 2 can recognize an effect of advertisement at a glance by obtaining the actual values. For example, when advertisement contents is displayed on a menu screen or a playback screen in VOD (Video On Demand) playback in an IFE (In Flight Entertainment) system in a moving body, advertisement content providing apparatus 4 adds color to frame of advertisement displayed during operation of IFE system for each actual result (for example, encircling a higher number of views in green and encircling a lower number of views in red). Business operator of moving body 2 can check at a glance which advertisement has a higher number of views. Consequently, it is possible to make a countermeasure of changing a position, a size and a provided manner, for an advertisement of a lower number of views.

Further, advertisement content providing apparatus 4 provides past actual results, which are stored in actual result database 12, which are obtained before advertisement contents are replaced or sizes of advertisement are corrected. By providing the past actual results, advertiser 1 and business operator of moving body 2 can recognize an effect brought by replacing the advertisement contents or correcting sizes of the advertisement.

In addition, in the present exemplary embodiment, advertisement content providing apparatus 4 provides the actual results for each of route information to advertiser 1 and provides actual results with respect to each provided manner for displaying advertisement contents to business operator of moving body 2. This is a result of considering effectiveness, however providing destinations are not limited.

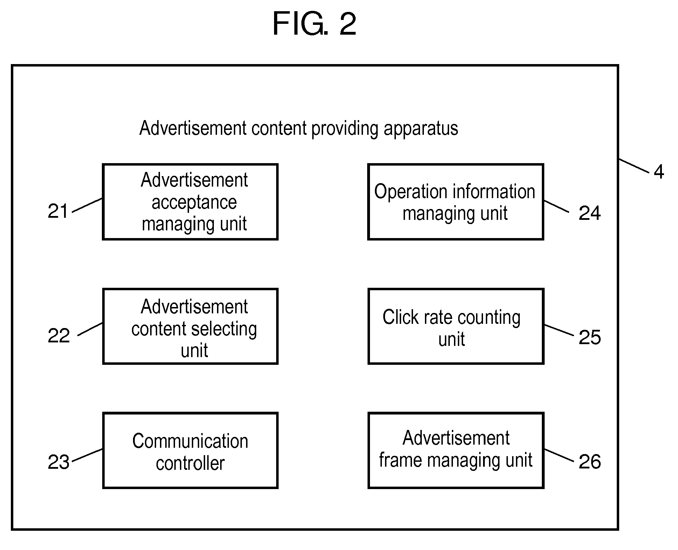

FIG. 2 illustrates details of advertisement content providing apparatus 4. Advertisement content providing apparatus 4 includes advertisement acceptance managing unit 21. Advertisement acceptance managing unit 21 accepts registration of advertisement contents which advertiser 1 wishes to display in the moving body. Acceptable advertisement content includes texts, sounds, images, banner images, moving images, pop-up images, and rich media using HTML5. They may be adopted international standards such as IAB (Interactive Advertising Bureau) for convenience of compatibility. It is possible to set an arbitrary campaign period (posting period) and freely set a bid price to advertisement content. Further, it is possible to set an operation when advertisement content such as a banner image is clicked, and an operation example is a link jump to a detailed homepage or playback start of moving image advertisement. Further, it is possible to add to advertisement an advertisement tag indicating an advertisement genre. For example, in case of advertisement of a restaurant, by setting an advertisement tag of gourmet, it is possible to perform targeting of, such as, providing this advertisement before or after the evening or providing this advertisement to passengers who are watching gourmet programs in the moving body. In addition, inputting payment information of a bank may be simultaneously performed to register advertisement contents, yet will not be described in the exemplary embodiments of the present disclosure.

Advertisement content providing apparatus 4 includes operation information managing unit 24. Operation information managing unit 24 accepts registration of information of a moving body information and route information of the moving body, in which business operator of moving body 2 wishes to display advertisement contents. The moving body information includes a moving body ID for specifying a moving body, a model number for specifying a display, having a moving body, which can display advertisement, a display ID for specifying the display, and version information of displaying software. The route information includes a place of departure, a place of relay, a place of arrival, a passing point, a departure/arrival date, a timing of meals, a lights-out time and a delay time. In addition, registration may be manual inputs by a dedicated GUI using a web browser or may be an automatic transfer from a dedicated database which business operator of moving body 2 owns.

Further, advertisement content providing apparatus 4 includes advertisement frame managing unit 26. Advertisement frame managing unit 26 accepts information indicating which area of a display in the moving body(frame of advertisement) and a timing, which business operator of moving body 2 wishes to display advertisement contents, or a genre of advertisement contents which business operator of moving body 2 does not wish to display advertisement contents. In addition, in case of the IFE system in a moving body, the frame of advertisement is part of a menu screen, a selection screen of a VOD, a lateral side of an operation panel of the VOD or a VOD screen before or after viewing of the VOD.

Advertisement content providing apparatus 4 includes click rate counting unit 25. Click rate counting unit 25 counts a number of clicks, a number of impressions and a click rate, for each moving body, and a number of clicks, a number of impressions and a click rate, for each route, and stores the number of clicks, the number of impressions and the click rates in actual result database 12. More specifically, moving body information has not only a moving body ID, but also in a model number of a display or version of displaying software, a type of a screen displayed upon clicking(the screen of an operation screen of a VOD, a screen of a map or the like), an operation of a passenger to click (a menu operation of a terminal in moving body or the like) and external environment upon clicking(the weather or the like) and internal environment upon clicking (a seat belt sign, a degree of congestion or the like). More specifically, route information has not only a place of departure, a place of arrival and a departure/arrival date, but also a passing point (a station, a boarder, a dateline or the like) and a time (before or after a lights-out time, before or after timing of in-flight meals or the like). The click rate is based on a CTR (Click Through Rate) that each of advertisement contents is clicked, and is calculated by dividing the number of clicks by the number of impressions (the number of times that each of advertisement contents is displayed).

Advertisement content providing apparatus 4 includes advertisement content selecting unit 22. Advertisement content selecting unit 22 lists optimal candidates of advertisement contents for each area where advertisement contents managed by advertisement frame managing unit 26 are displayed or optimal candidates of advertisement contents for each timing at when advertisement contents managed by advertisement frame managing unit 26 are displayed, based on the click rates of advertisement contents for each moving body and the click rates of advertisement contents for each route counted by click rates counting unit 25, bid prices of the advertisement contents and moving body information and route information managed by operation information managing unit 24. For example, when an airplane with airframe ID (corresponding to a moving body ID) NAL820 makes a flight from Kansai International Airport (KIX) to San Francisco International Airport (SFO), and then returns to KIX again, candidates of advertisement contents are listed for this airplane by taking into account both of advertisement contents whose CTR is higher in the airplane for SFO and advertisement contents whose CTR is higher in the airplane for KIX.

Advertisement content providing apparatus 4 includes communication controller 23. Communication controller 23 is used to establish a connection with advertiser 1 or business operator of moving body 2, and transfer the listed advertisement contents to content providing apparatus in moving body 8. In this regard, transfer manner may be transferring advertisement contents through a recording medium such as a hard disk instead of directly transferring advertisement contents.

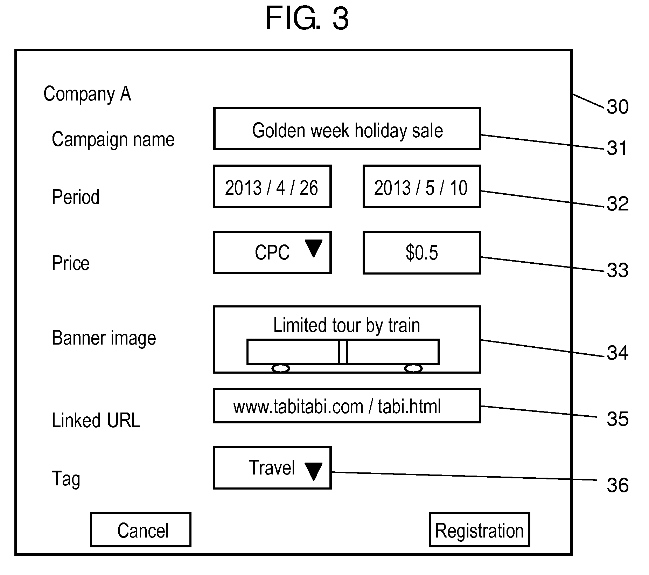

FIG. 3 is a view illustrating an example of a user interface used by advertiser 1 to register new advertisement contents through communication channel 3. For example, when a travel company A advertises a tour for a limited time of the Golden Week holidays, advertiser 1 accesses input screen 30, inputs "Golden Week Holiday Sale" to name input field 31 of a campaign name, "2013/4/26, 2013/5/10" to period input field 32 , "CPC, $0.5" to price input field 33, a banner image of a specified size to banner image upload field 34, and a linked site, to connect by clicking on the banner image, to linked URL input field 35 and selects an advertisement tag "travel" from advertisement tag menu 36.

In addition, as illustrated in FIG. 3, a payment method may be selected from a plurality of methods such as CPC (Cost Per Click) which is a charging system by clicking advertisement by users, CPA (Cost Per Action) which is a charging system by purchase/reservation and CPM (Cost Per Mille) which is a charging system by displaying advertisement, or a payment method may be limited to the CPC or the like. Further, the advertisement tag may be configured to be selected from candidate tags as in FIG. 3, and may be freely input. Furthermore, an advertisement tag may be configured to be selected automatically by analyzing the banner image or the linked site.

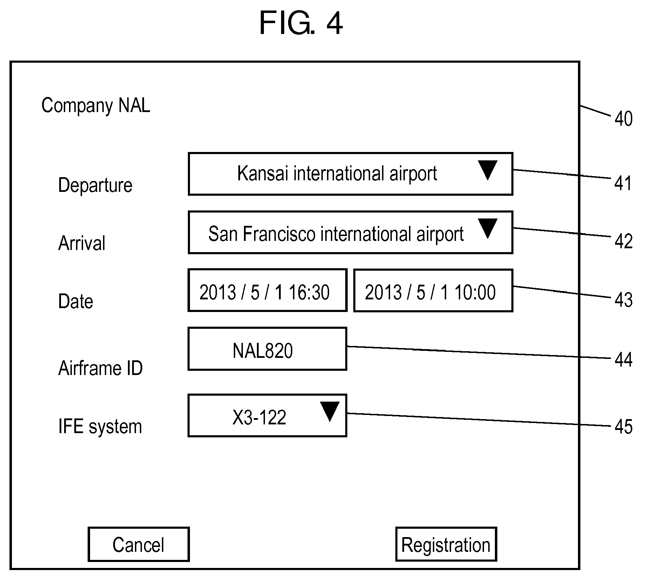

FIG. 4 is a view illustrating an example of a user interface used to register route information in which business operator of moving body 2 wishes to display advertisement contents through communication channel 3. For example, when airline company NAL wishes to display advertisement contents on a monitor of an IFE system placed on a seat back in a moving body from KIX to SFO, business operator of moving body 2 accesses input screen 40, selects Kansai International Airport from departure entry 41, selects San Francisco International Airport from arrival entry 42, inputs 2013/5/1 16:30 and 2013/5/1 10:00 to date input field 43, inputs NAL820 to airframe ID input field 44, and inputs a model number of the IFE system used in NAL820, to IFE system input menu 45. In addition, instead of using the user interface as in FIG. 4, route information may be registered automatically by using an automatic transfer system which links a dedicated database which business operator of moving body 2 owns. Alternatively, a specification that some of route information such as airframe ID are registered by using the user interface, and rest of route information are registered by using the automatic transfer system which links the dedicated database may be provided.

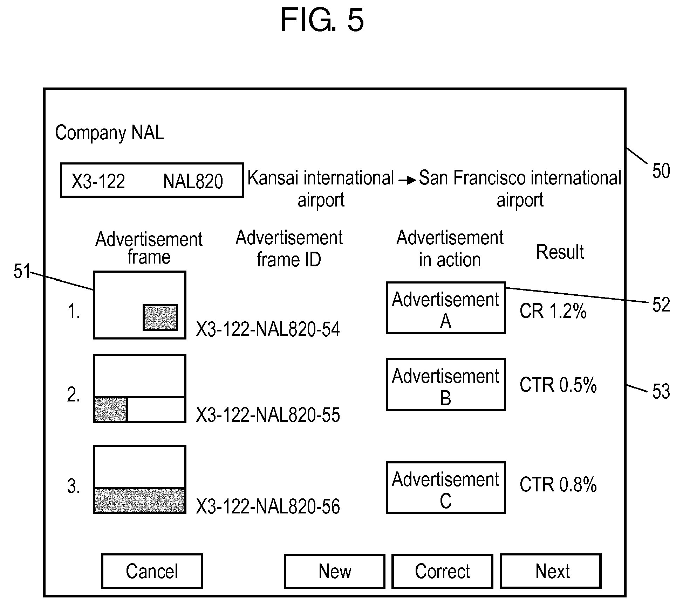

FIG. 5 is a view illustrating an example of a user interface used to register, check and correct an advertisement display area for each route in which business operator of moving body 2 wishes to display advertisement contents through communication channel 3. For example, when airline company NAL wishes to set an advertisement frame to IFE system X3-122 with airframe ID NAL820, business operator of moving body 2 accesses input screen 50 and set a plurality of advertisement frames 51. Further, business operator of moving body 2 checks actual advertisement frames like advertisement in action 52, and corrects the advertisement when involuntary advertisement is selected just in case. Furthermore, it is possible to check actual results of CTR values as in result 53, and replace an advertisement whose CTR is lower with another advertisement. In addition, it may be possible to check/correct actual advertisement and a result together with the interface of setting an advertisement frame as in FIG. 5, or check only a result using another interface. Further, a specification to register an advertisement frame through a GUI of a web browser or register an advertisement frame using a design development tool of display software, for example, in case of an IFE system in a moving body may be adopted.

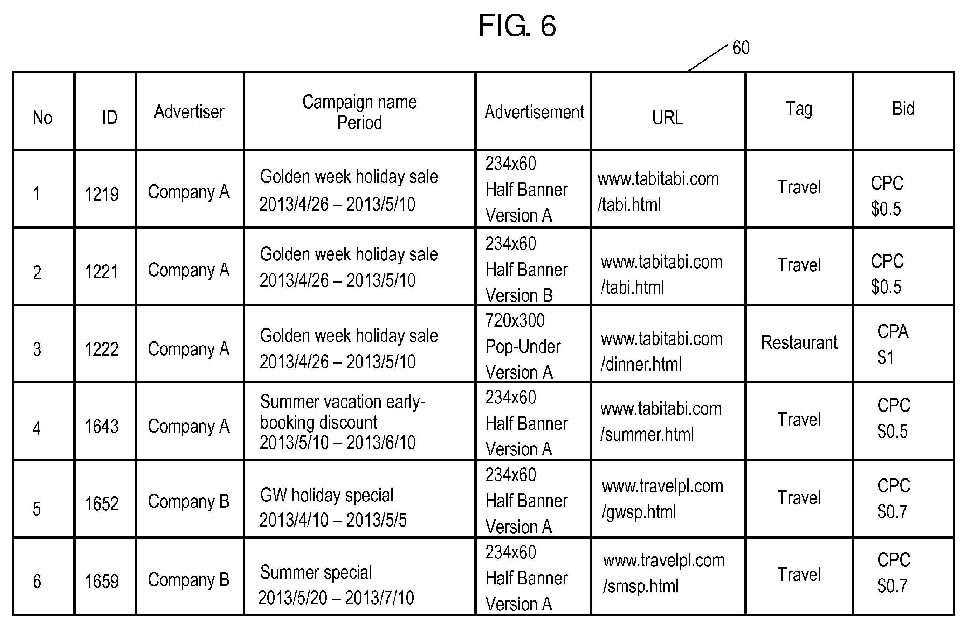

FIG. 6 illustrates database 60 which manages a list of advertisement contents registered by advertiser 1, and the list is stored together with advertisement content data such as banner images in advertisement content database 5. FIG. 6 illustrates an example where company A registers three different advertisement contents of the same period with the same campaign name of "Golden Week Holiday Sale" and an advertisement content of another period with a campaign name of "Summer Vacation Early-Booking Discount", and company B registers an advertisement content with a campaign name of "GW Holiday Special" which competes with "Golden Week Holiday Sale" of company A in the same period and an advertisement content with a campaign name of "Summer Special" which competes with "Summer Vacation Early-Booking Discount" of company A. In case of this example, bid prices of company B are higher than those of company A, and therefore the advertisement of company B is adopted when selection is simply made based only on bid prices.

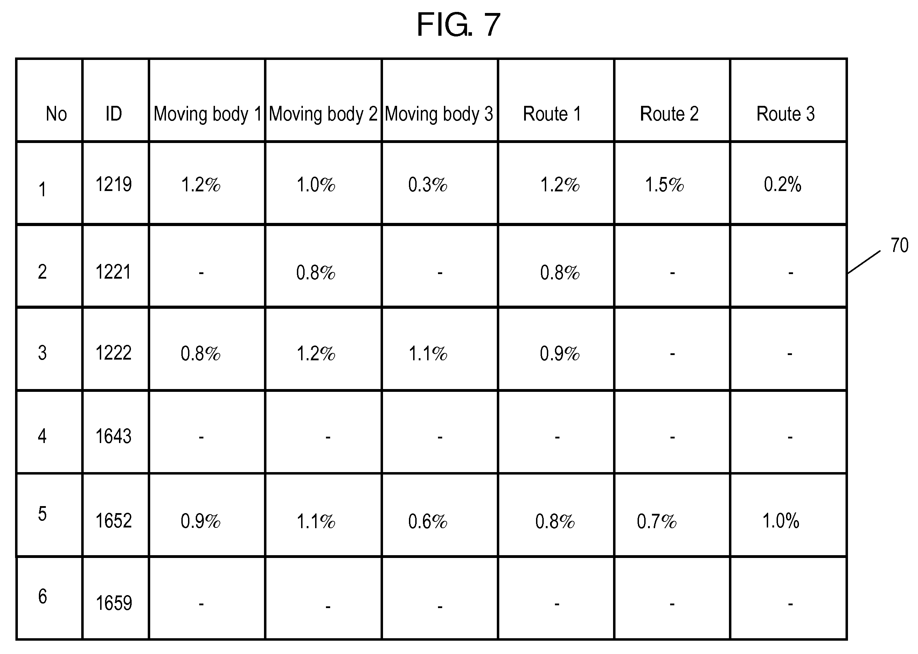

FIG. 7 illustrates database 70 which manages actual results such as CTRs of advertisement contents for each moving body and CTRs of advertisement contents for each route, and database 70 is stored in actual result database 12. For example, a CTR value of advertisement ID 1219 (company A, "Golden Week Holiday Sale", Half Banner version A) in moving body 1 is higher than a CTR value of advertisement ID 1219 in moving body 3, and moving body 1 is effective in displaying the advertisement. Further, a CTR value of advertisement ID 1219 in route 2 is higher than a CTR value of advertisement ID 1219 in route 1. Meanwhile, there is not a CTR value of advertisement ID 1643 (company A, "Summer Vacation Early-Booking Discount", Half Banner version A) and nothing is effective in displaying the advertisement.

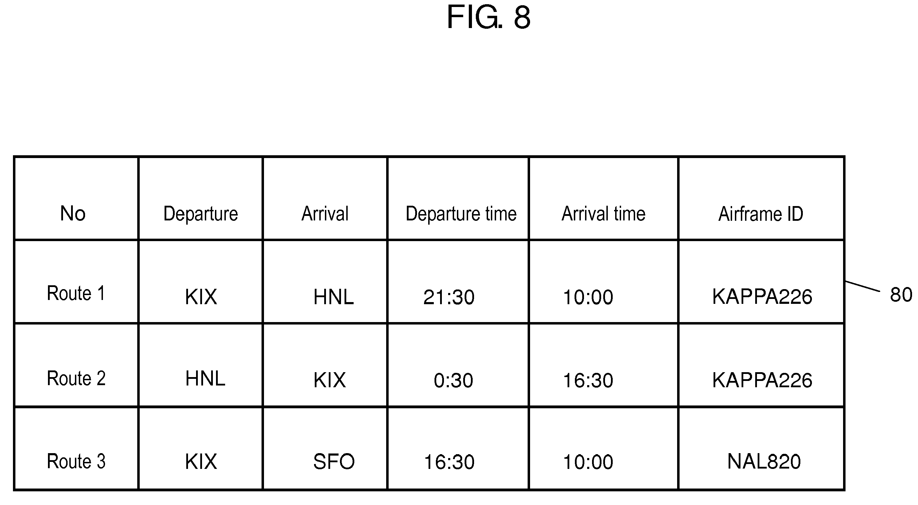

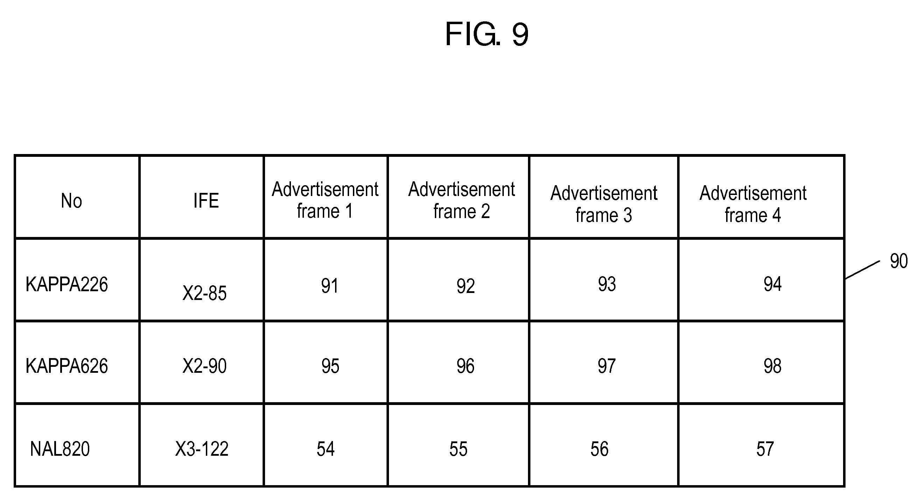

FIG. 8 illustrates database 80 which manages route information registered by business operator of moving body 2. FIG. 9 illustrates database 90 which manages advertisement display areas (advertisement frames) for each of IFE systems, by using ID numbers, in which business operator of moving body 2 wishes to display advertisement contents, and database 90 is stored in moving body/route information database 6. For example, as illustrated in FIGS. 8 and 9, route 1 is a flight of KAPPA226 departing from KIX and arriving at HNL, and KAPPA226 mounts a IFE system called X2-85, and includes and manages four types of advertisement frames which are prepared and assigned advertisement frame IDs 91 to 94.

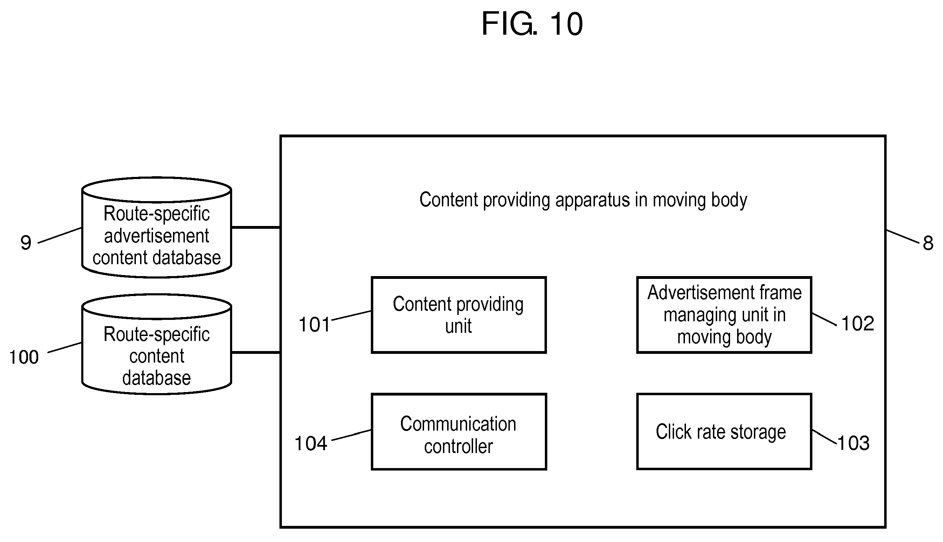

FIG. 10 illustrates details of content providing apparatus in moving body 8. Content providing apparatus in moving body 8 is connected with route-specific advertisement content database 9 which stores advertisement contents selected by advertisement content providing apparatus 4, and route-specific content database 100 which stores contents (e.g. VOD contents for the IFE) other than the advertisement contents. Content providing unit 101 provides VOD contents or advertisement contents to display on a display of each passenger. Advertisement frame managing unit in moving body 102 manages only necessary information of each moving body among contents of the database in FIG. 9. Click rate storage 103 manages actual results of clicks of advertisement contents or actions by passengers. Communication controller 104 transmits contents including advertisement contents, for displays of passengers, and receives actual results of clicks of the advertisement contents.

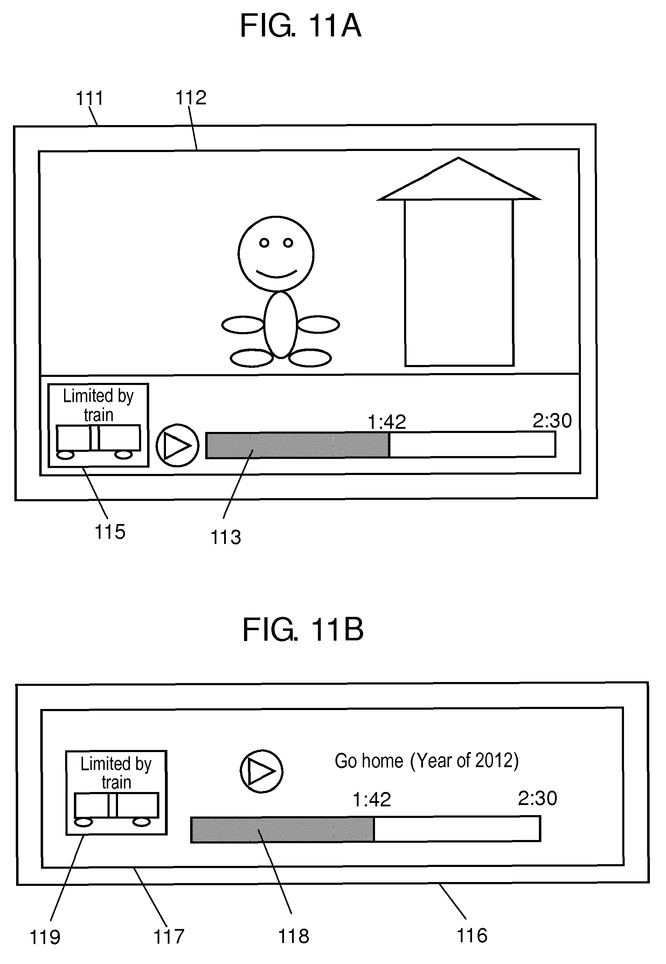

FIG. 11A illustrates an example of displaying advertisement contents on a display provided in a moving body. When a passenger watches VOD content 112 on a monitor 111 placed on a seat back in a moving body, banner image 115 as an advertisement content is displayed next to display frame 113 including operation buttons, such as a pause button and a play button, and a progress bar.

FIG. 11B illustrates an example of displaying advertisement contents on a display on a mobile terminal provided in a moving body, and illustrates that banner image 119 as an advertisement content is displayed next to display frame 118 including operation buttons, such as a pause button and a play button and a progress bar on attached display 117 of controller 116 which controls a monitor placed on a seat beck in a moving body.

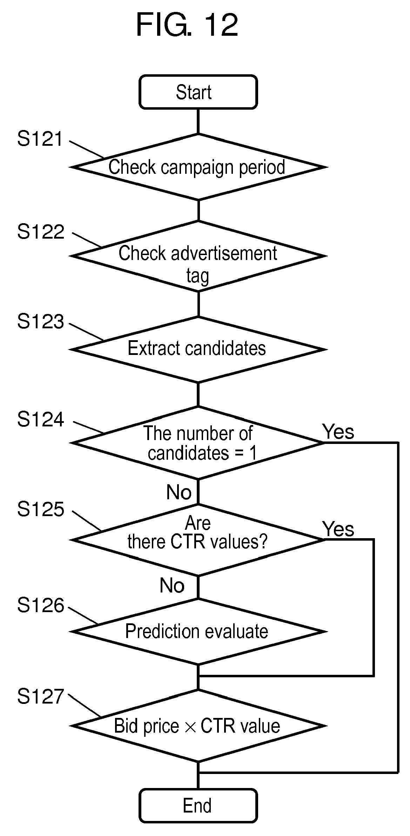

FIG. 12 is a view illustrating a flowchart in which advertisement content providing apparatus 4 selects advertisement contents to be displayed, from candidates of advertisement contents.

First, advertisement content providing apparatus 4 checks a posting period of advertisement contents (step S121). The flowchart will be described using an example to select and display one advertisement content in advertisement frame ID 91(see FIGS. 8 and 9) of the X2-85 system of KAPPA226 from KIX to HNL in route 1 on a flight of 2013/5/1, from six advertisement contents illustrated in FIG. 6. In this case, advertisement contents corresponding to advertisement IDs 1643 and 1659 are out of posting periods and therefore excluded.

Next, advertisement content providing apparatus 4 checks an advertisement tag (step S122). If an advertisement tag related to advertisement contents which business operator of moving body 2 does not wish to display is assigned, these advertisement contents are excluded at this step.

After finishing the above check, advertisement content providing apparatus 4 extracts candidates of advertisement contents (step S123). In case of a Half Banner having a size of 234 × 60 of advertisement frame ID 91, advertisement contents corresponding to advertisement IDs 1219, 1221 and 1652 are candidates.

In this step, when there is only one candidate (Yes in step S124) advertisement content providing apparatus 4 selects this candidate (step S128) and the flowchart ends.

When there is a plurality of candidates (No in step S124), advertisement content providing apparatus 4 checks CTR values (step S125). In case of route 1, a CTR value of advertisement ID 1219 is 1.2%, a CTR value of advertisement ID 1221 is 0.8% and a CTR value of advertisement ID 1652 is 0.8% as illustrated in FIG. 7. Further, when moving body 1 indicates advertisement frame ID 91, a CTR value of advertisement ID 1219 is 1.2%, a CTR value of advertisement ID 1221 is 1.0% and a CTR value of advertisement ID 1652 is 0.3%.

When there are CTR values (Yes in step S125), advertisement content providing apparatus 4 compares multiplication values obtained by multiplying each of bid prices and each of CTR values (step S127). Since a multiplication value of advertisement ID 1219 is 0.5 × 1.2 × 1.2 = 0.72, a multiplication value of advertisement ID 1221 is 0.5 × 0.8 × 1.0 = 0.4 and a multiplication value of advertisement ID 1652 is 0.7 × 0.8 × 0.3 = 0.168, advertisement ID 1219, which is the highest multiplication value, is selected (step S128). While a bid price of advertisement ID 1652 is $0.7 and is higher than a bid price $0.5 of advertisement IDs 1219 and 1221, advertisement ID 1219 is selected as the most efficient advertisement content. In addition, the example shows a multiplication value of each advertisement ID obtained by multiplying both of a CTR value for route 1 and a CTR value for moving body 1. However, it is allowed to use the multiplication value of each advertisement ID may obtain by multiplying only one of the CTR value or the weighting of 7:3 into the both of the CTR values.

When a candidate is advertisement content such as advertisement ID 1643 which has not a CTR value(No in step S125), advertisement content providing apparatus 4 uses an estimated value instead of the CTR value (step S126). The estimated value uses a past CTR value of advertisement contents including the same advertisement tag in the same route.

As described above, the accompanying drawings and the detailed description of the disclosure have been provided for the exemplary embodiment and another exemplary embodiment which the applicant thinks the best mode. These accompanying drawings and the detailed description of the disclosure are provided to exemplify the subject matters recited in the claims for one of ordinary skill in the art with reference to a particular exemplary embodiment. Accordingly, the components disclosed in the accompanying drawings and the detailed description of the disclosure include not only components which are required to solve the problem but also other components. Therefore, it should not be immediately understood that those components which are not required are necessary simply because these components which are not required are disclosed in the accompanying drawings and the detailed description of the disclosure. Further, the above exemplary embodiment can be variously changed, replaced, added and omitted in the range of the claims or the range equivalent to the claims.

### Industrial Applicability

The present disclosure is applicable to an advertisement content providing system for a moving body based on a profit efficiency for each pair of moving body and route. More specifically, the present disclosure is applicable to display advertisement for trains, cars, ships and airplanes.

### REFERENCE MARKS IN THE DRAWINGS

- 1: advertiser
- 2: business operator of moving body
- 3, 7, 10: communication channel
- 4: advertisement content providing apparatus
- 5: advertisement content database
- 6: moving body/route information database
- 8: content providing apparatus in moving body
- 9: route-specific advertisement content database
- 11: passenger
- 12: actual result database
- 21: advertisement acceptance managing unit
- 22: advertisement content selecting unit
- 23: communication controller
- 24: operation information managing unit
- 25: click rate counting unit
- 26: advertisement frame managing unit
- 60, 70, 80, 90: database

## Claims

1. An advertisement content providing apparatus for distributing advertisement contents to passengers on a moving body, the apparatus comprising:
advertisement selecting unit which receives moving body information for specifying the moving body and route information for specifying a route, from a business operator of the moving body, and selects a plurality of advertisement contents for the specified moving body and the specified route; and
click rate counting unit which counts a click rate for each of the advertisement contents clicked by the passengers for the moving body and a click rate for each of the advertisement contents clicked by the passengers for the route,
wherein at least one of the advertisement contents selected by the advertisement selecting unit is selected from at least two or more advertisement contents based on a profit efficiency for a pair of the moving body and the route, and
the profit efficiency is determined by multiplying the click rates and a bid price of an advertiser.

2. The advertisement content providing apparatus according to claim 1, wherein
when a click rate of at least one of the two or more advertisement contents is not previously counted for the moving body, the advertisement selecting unit selects at least one of the advertisement contents from the two or more advertisement contents using only the click rate for the route.

3. The advertisement content providing apparatus according to claim 1, wherein
when a click rate of at least one of the two or more advertisement contents is not previously counted for the route, the advertisement selecting unit selects at least one of the advertisement contents from the two or more advertisement contents using only the click rate for the moving body.

4. The advertisement content providing apparatus according to claim 1, wherein
the profit efficiency for the pair of the moving body and the route is notified to the advertiser or the business operator of the moving body which provides the moving body information and the route information.

5. The advertisement content providing apparatus according to claim 1, wherein
the click rate is an actual value counted for the moving body or an actual value counted for the route and
the advertisement selecting unit selects a plurality of advertisement contents using the actual value of the click rate.

6. The advertisement content providing apparatus according to claim 1, wherein
the advertisement contents selected by the advertisement selecting unit are distributed in advance to the moving body before moving of the moving body.

7. The advertisement content providing apparatus according to claim 1, wherein
the click rate is a rate that each of the advertisement contents is clicked by the passengers, and is calculated by dividing a number of clicks by a number of times that each of the advertisement contents is displayed.

8. An advertisement content providing method of distributing advertisement contents to passengers on a moving body by an advertisement content providing apparatus, the advertisement content providing apparatus including click rate counting unit which counts a click rate for each of the advertisement contents clicked for the moving body and a click rate for each of the advertisement contents clicked for the route,
the advertisement content providing method comprising:
receiving moving body information for specifying the moving body and route information for specifying the route, and providing a plurality of advertisement contents for the specified moving body and the specified route;
selecting at least one of the advertisement contents to be provided, from at least two or more advertisement contents based on a profit efficiency for a pair of the moving body and the route; and
the profit efficiency is determined by multiplying the click rate and a bid price of an advertiser.

9. An advertisement content providing method of distributing advertisement contents to passengers on a moving body by an advertisement content providing apparatus, the advertisement content providing method comprising:
extracting candidates of the advertisement contents to be displayed;
selecting one candidate when there is only one candidate of the advertisement contents,;
checking an actual value of a click rate of each of the candidates, when there is a plurality of candidates of the advertisement contents; and
multiplying a bid price and the actual value, when there is the actual value of the click rate, and selecting a candidate having the highest result as the advertisement content.

10. The advertisement content providing method according to claim 9, wherein
when there is no actual value of the click rate, an estimated value is used instead.

11. The advertisement content providing method according to claim 10, wherein
the estimated value is a past actual value of advertisement including a same advertisement tag in a same route.
